Europäisches Patentamt

European Patent Office

Office européen des brevets

(11) Publication number: **0 257 672**
**A1**

## EUROPEAN PATENT APPLICATION

(21) Application number: 87201390.9

(51) Int. Cl.⁴ **H04M 3/42** , H04M 3/54

(22) Date of filing: 21.07.87

(30) Priority: 04.08.86 NL 8601982

(43) Date of publication of application:
02.03.88 Bulletin 88/09

(84) Designated Contracting States:
DE FR GB IT NL SE

(71) Applicant: **N.V. Philips' Gloeilampenfabrieken**
**Groenewoudseweg 1**
**NL-5621 BA Eindhoven(NL)**

(72) Inventor: **Maat, Jan Philippus**
**Int. Octrooibureau B.V Prof. Holstlaan 6**
**NL-5656 AA Eindhoven(NL)**
Inventor: **Kesteloo, Jan Pieter**
**Int. Octrooibureau B.V Prof. Holstlaan 6**
**NL-5656 AA Eindhoven(NL)**

(74) Representative: **De Jongh, Cornelis**
**Dominicus et al**
**INTERNATIONAAL OCTROOIBUREAU B.V.**
**Prof. Holstlaan 6**
**NL-5656 AA Eindhoven(NL)**

(54) Digital telecommunication system comprising an exchange and a group of multi-access telephone terminals.

(57) A plurality of telecommunication terminals connected to an exchange can be combined into one group in which all terminals of this group are informed about the operating condition of each individual terminal. An arbitrary terminal j after noticing a call for terminal i, can answer this call by transmitting an appropriate access signal. This can also take place whilst terminal j has the busy condition. All signals required for this are transmitted through the subscriber line to the exchange, so direct interlinking of the terminals of a group is not required.

EP 0 257 672 A1

# Digital telecommunication system comprising an exchange and a group of multi-access telephone terminals.

The invention relates to a digital telecommunication system comprising an exchange and a group of terminals each connected to this exchange via a subscribed line, in which system information about the operating condition of each terminal belonging to the group is transmitted through a channel comprised in the system to the remaining terminals of the group by means of status information signals, the terminals comprising decoding means for making the operating condition of the aforementioned terminal perceivable to the user and being controlled by the status information signal received by the terminals.

Such a system is known from the journal "Philips Telecommunication Review", Vol. 40, No. 4, December 1982, pp. 327-336.

The system described in this article creates the possibility to combine into one group a plurality of terminals connected to the exchange, which terminal group can then be made available to a functionally cooperating group of users such as executive-secretary combinations or so-called business groups.

The partners of that group receive information about the status of the other partners via a separate line interlinking all terminals belonging to the group. In the aforementioned publication this line is described as "common data pair" or "c/d data bus". In this publication it is further described that the partners are informed about the following statuses of a terminal: free, busy, calling or absent. This publication does not disclose that the partners are informed about the called states of each one of the members of the group.

It is generally desired for a functionally cooperating group to show a high degree of flexibility in a working environment. It is desirable that such a group should allow easy change in composition or complete or partial change of location (external flexibility). It is also desirable that the partners should be able to change places in a simple manner or (temporarily) take over each others' task (internal flexibility).

The invention has for its object to provide a telecommunication system of the kind mentioned in the preamble, the system offering to a functionally cooperating group a higher degree of internal and external flexibility concerning the telecommunication aspects.

To this end the system in accordance with the invention is characterized in that the status information signals are individually transmitted from the exchange via the subscriber line to the terminals belonging to the group, in that a status information signal is formed by a calling information signal representing the called status of the aforementioned terminal, in that each terminal belonging to the group comprises transmission means for transmitting an access signal via the subscriber line to the exchange when an appropriate signalling element is activated on the relevant terminal, and in that during transmission of the calling information signal the exchange stops transmitting the calling information signal in response to the access signal and establishes a communication connection between the telecommunication line causing the call and the terminal supplying the access signal.

As the aforesaid signals are transmitted only via the subscriber line, there is no longer a necessity to have a separate line between the terminals of the group, which facilitates the relocation of a terminal. In addition, further measures related to the relocation of the terminal or the user can now be carried out at one place (the exchange). These measures add to increased external flexibility. By further choosing the calling information signal for a status information signal, and by combining this choice with the possibility of answering the call for another terminal via the access signal, it will be possible for a member of the group of users to answer the call for another member of the group. These measures will thus add to an increased internal flexibility.

A further increase of the flexibility of the group of users is made possible as the system is characterized in that each terminal belonging to the group comprises transmission means suitable for transmitting during its busy condition the access signal to the exchange, and that during the busy condition of the terminal generating the access signal the exchange brings the telecommunication partner connected to this terminal into the hold-on status in response to the access signal.

If a member of the group of users perceives during the busy status of his own terminal that another terminal of the group is being called, the possibility will be offered to him by the aforesaid measures to answer the call of this other terminal. After finishing this call the relevant member of the group can resume the communication with his original communication partner, as this partner was put into the hold-on status.

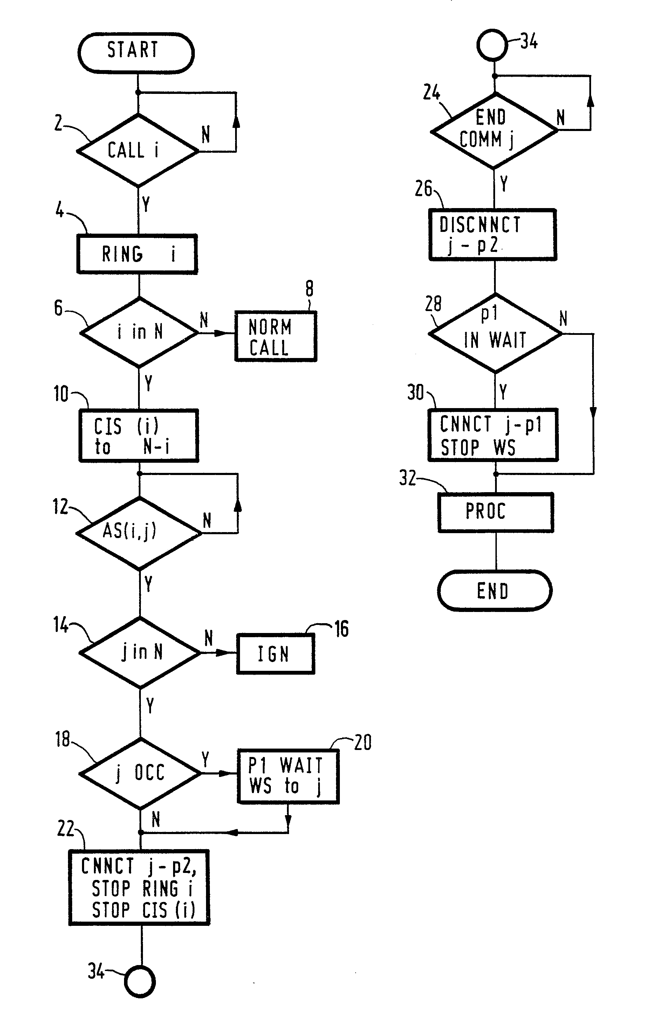

The invention and its advantages will be further explained with reference to the figure. The figure shows a flow chart illustrating the behaviour of the system in accordance with the invention under the influence of various signals. The blocks in the diagram have the following meaning:

| block number | title | meaning |
| --- | --- | --- |
| 2 | CALL i | check whether there is a call for a terminal of the group. |
| 4 | RING i | send a ringing signal to the called terminal. |
| 6 | i in N | check whether the called |

| | | |
|---|---|---|
| | | terminal forms a part of the group. |
| 8 | NORM CALL | the normal procedure for a call is followed. |
| 10 | CIS (i) to N-1 | a calling information signal is transmitted to the other members of the group stating that a certain terminal is being called. |
| 12 | AS(i,j) | check whether an access signal for the called terminal is received from another terminal (terminal j). |
| 14 | j in N | check whether terminal j forms a part of the same group. |
| 16 | IGN | the access signal is ignored. |
| 18 | j OCC | check whether terminal j is communicating with a communication partner p1. |
| 20 | p1 WAIT WS to j | the telecommunication line with communication partner p1 is brought into the hold-on status and a waiting signal is transmitted to terminal j. |
| 22 | CNNCT j-p2 STOP RING i, STOP CIS(i) | a communucation connection is established between terminal j and the calling partner p2 of the called terminal, the ringing signal to the called terminal is stopped, the calling information signal is stopped. |
| 24 | END COMM j | check whether terminal j transmits a signal that its communication with partner p2 has ended. |
| 26 | DISCNNCT j-p2 | disconnect the communication connection between terminal j and partner p2. |
| 28 | p1 IN WAIT | check whether a communication partner of terminal j has the hold-on status. |
| 30 | CNNCT j-p1 STOP WS | a communication connection is re-established between terminal j and the waiting partner, transmission of the waiting signal to terminal j is stopped. |

32    PROC          the normal procedure for handling a
                    communication connection is followed.

After it has been established in the exchange that a call for a terminal of the group has come in (block 2), a calling signal is transmitted from the exchange to the relevant terminal (terminal i) (block 4). In doing so, the exchange checks whether the terminal i belongs to the aforesaid group N (block 6). If not, the normal procedure known per se for dealing with a call is followed (block 8). If a called terminal i does belong to the group N, the calling information signal CIS (i) is transmitted to all remaining terminals of the group (block 10). Each one of the members of the group can now perceive the called status of terminal i.

If a member of the group decides to answer the call for terminal i, he will activate a relevant signalling element on his own terminal j, transmitting from this terminal j an access signal AS (i,j) to the exchange (block 12). Signal AS (i,j) indicates that terminal j wishes to answer the call of terminal i.

In response to the access signal AS (i,j) the exchange checks whether terminal j belongs to the same group as terminal i (block 14). If not, the received access signal will have no further consequences (block 16).

If the terminals i and j do belong to the same group it is checked whether terminal j had the busy status (block 18) when the access signal was being transmitted. In that case the telecommunication line of communication partner p1 of terminal j is first brought into the hold-on status, whilst a waiting signal WS is being transmitted to terminal j (block 20). This will remind the user of terminal j of the hold-on status of his original communication partner p1. Subsequently, block 22 is moved to. Also after the detection of the free status of terminal j, block 22 is moved to.

Block 22 implies connecting caller p2 of terminal i to terminal j, terminating the caller signal for terminal i and the call information signal CIS(i) for the remaining terminals.

After terminal j has transmitted to the exchange a signal indicating that the communication has finished (block 24), the connection between terminal j and communication partner p2 is broken off (block 26), whereupon the exchange checks whether there is still a communication partner of terminal j in the hold-on status (block 28). If not, the normal procedure for further handling is followed (block 32).

If terminal j still had a communication partner in the hold-on status, the original connection between terminal j and this partner is re-established, and the waiting signal WS is cancelled (block 30). After this communication has ended , the aforementioned normal procedure (block 32) is changed to, whereupon the access procedure is stopped.

## Claims

1. A digital telecommunication system comprising an exchange and a group of terminals each connected to this exchange via a subscriber line,
in which system information about the operating condition of each terminal belonging to the group is transmitted through a channel comprised in the system to the remaining terminals of the group by means of status information signals,
the terminals comprising decoding means for making the operating condition of the aforementioned terminal perceivable to the user and being controlled by the status information signal received by the terminals, characterized in that
the status information signals are individually transmitted from the exchange via the subscriber line to the terminals belonging to the group,
in that a status information signal is formed by a calling information signal representing the called status of the aforementioned terminal,
in that each terminal belonging to the group comprises transmission means for transmitting an access signal via the subscribing line to the exchange when an appropriate signalling element is activated on the relevant terminal,
in that during transmission of the calling information signal the exchange stops transmitting the calling information signal in response to the access signal and establishes a communication connection between the telecommunication line causing the call and the terminal supplying the access signal.

2. A telecommunication system as claimed in Claim 1, characterized in that each terminal belonging to the group comprises transmission means suitable for transmitting during its busy condition the access signal to the exchange,

and that during the busy condition of the terminal generating the access signal the exchange brings the telecommunication partner connected to this terminal into the hold-on status in response to the access signal.

3. A telecommunication system as claimed in Claim 1, characterized in that during the hold-on status of the telecommunication partner the exchange transmits a waiting signal to the terminal which has generated the access signal, with the waiting signal activating a waiting indicator perceivable to the user.

4. A telecommunication system as claimed in any one of Claim 1, 2 or 3, characterized in that the calling information signal comprises a first portion, identifying the function of this signal and a second portion, identifying the called terminal.

5. A telecommunication system as claimed in any one of the preceding Claims, characterized in that the access signal comprises a first portion, identifying the function of this signal and a second portion, indentifying the terminal generating the access signal.

6. A telecommunication system as claimed in any one of Claims 2, 3, 4 or 5, characterized in that each terminal in the group is suitable for transmitting a call terminating signal, and that the exchange transmits a calling signal to the relevant terminal in response to receiving a call terminating signal if a telecommunication partner previously communicating with this terminal has assumed the hold-on status.

7. A telecommunication terminal suitable for use in a telecommunication system as claimed in Claim 1, this terminal comprises decoding means for decoding status-information signals received by the terminal and for displaying to the user of the terminal the operating condition of other terminals of the system, characterized in that the terminal further comprises a signalling section and transfer means for transferring an access signal via the subscriber line to the exchange when the signalling element is activated.

8. A telecommunication terminal as claimed in Claim 7, suitable for use in a telecommunication system as claimed in Claim 2, characterized in that the terminal comprises transfer means designed to transfer the access signal to the exchange during the busy-condition of the terminal.

9. A telecommunication terminal as claimed in Claim 8, suitable for use in a telecommunication system as claimed in Claim 3, characterized in that the terminal comprises a hold-on indicator for making perceivable to the user of the terminal in response to a hold-on signal received by the terminal the hold-on status of the telecommunication line originally communicating with the terminal.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | ERICSSON REVIEW, vol. 59, no. 2, 1982, pages 58-66, Stockholm, SE; J. REINIUS et al.: "DIAVOX courier 700, digital system telephone for MD 110" * Page 62, left-hand column, lines 1-26, right-hand column, lines 12-21; page 66, left-hand column, lines 21-42 * | 1-9 | H 04 M 3/42 H 04 M 3/54 |
| Y | SYSTEMS TECHNOLOGY, no. 28, April 1978, pages 7-13, Liverpool, GB; J.C.H. DAVIS: "The K1 PABX" * Page 8, right-hand column, lines 14-59 * | 1-9 | |
| A | US-A-4 150 257 (FENTON) * Column 1, line 55 - column 2, line 6; column 4, line 65 - column 5, line 33; column 8, line 50 - column 9, line 24 * | 1,4,5 | TECHNICAL FIELDS SEARCHED (Int. Cl.4) H 04 M |
| A | INTERNATIONAL CONFERENCE ON PRIVATE ELECTRONIC SWITCHING SYSTEMS, 10th-12th April 1978, pages 70-75, IEE, London, GB; T.M. QUINN: ""Horizon" communication system - an advanced technology system for small business customers" * Page 71, right-hand column, lines 32-52 * | 1,4,5 | |

--- -/-

The present search report has been drawn up for all claims

| Place of search | Date of completion of the search | Examiner |
|---|---|---|
| THE HAGUE | 10-11-1987 | VANDEVENNE M.J. |

European Patent Office

**EUROPEAN SEARCH REPORT**

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | DE-A-3 240 589 (SIEMENS-ALBIS) <br><br> * Page 7, line 9 - page 8, line 2 * | | |
| | ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 10-11-1987 | VANDEVENNE M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82